# EUROPÄISCHE PATENTSCHRIFT

(11) **EP 0 624 513 B1**
(45) Veröffentlichungstag und Bekanntmachung des Hinweises auf die Patenterteilung: **06.08.1997**
(21) Anmeldenummer: 94107015.3
(22) Anmeldetag: 05.05.1994
(51) Int. Cl.: B64C 3/18

(54) **Tragstruktur für eine aerodynamische Fläche**
Load-carrying structure for an aerodynamic surface
Structure travaillante pour une surface aérodynamique

(30) Priorität: 11.05.1993 DE 4315600
(43) Veröffentlichungstag der Anmeldung: 17.11.1994
(73) Patentinhaber: Daimler-Benz Aerospace Airbus Gesellschaft mit beschränkter Haftung, 21129 Hamburg (DE)
(72) Erfinder: Bauer, Richard, D-22589 Hamburg (DE)
(74) Vertreter: Hansmann, Dierk, Dipl.-Ing.

(56) Entgegenhaltungen:
- WO-A-85/01489
- US-A- 1 877 022
- US-A- 2 372 510

## Beschreibung

Die Erfindung bezieht sich auf eine Tragstruktur für eine aerodynamische Fläche an einem Flugzeug. Der Tragflügel und die Leitwerke eines Flugzeuges stellen entsprechende aerodynamische Flächen dar, wobei es sich jedoch nicht um Flächen im geometrischen Sinne sondern um Körper handelt. Bei Anwendung der Schalenbauweise ist die Tragstruktur beispielsweise des Tragflügels der sog. Flügelkasten, der im Prinzip aus einer oberen Schale, einer unteren Schale, einem Vorderholm, einem Hinterholm und Rippen besteht. Die genannten Schalen bestehen dabei aus in Richtung der Spannweite verlaufenden Hautfeldern, die auf ihren Innenseiten durch längslaufende Stringer und durch Rippen ausgesteift sind. Bei den Holmen handelt es sich im Prinzip um ebenflächige Bauteile, wohingegen die Schalen entsprechend dem aerodynamischen Profil des Flügels im allgemeinen gekrümmt sind. Die im Inneren des Flügelkastens angeordneten Rippen verlaufen von Holm zu Holm und sind an ihren Längskanten mit den Schalen verbunden. Die Verbindungen zwischen den Holmen und den Rippen bzw. zwischen den Schalen und Holmen bzw. Rippen sind vorwiegend durch übliche Universalniete oder Schraubniete mit einem Setzkopf und einem Schließkopf realisiert, wobei der Schließkopf durch Schlagen oder Schrauben des Nietes auf der Innenseite der Struktur gebildet wird. Diese Niete erlauben die Herstellung kostengünstiger Verbindungen mit reproduzierbaren statischen Eigenschaften. Zur Erzielung einer möglichst glatten Außenfläche der betreffenden Bauteile ist die weitgehende Verwendung von Senknieten fachüblich. Bei hinreichender Profildicke und relativ geringer Profiltiefe des Flügels oder des Leitwerks bereitet der Zusammenbau der Schalen mit den Rippen und Holmen keinerlei Schwierigkeiten, da die zum Schlagen der Niete erforderliche Zugänglichkeit der Nietstellen von innen durch entsprechende Hand- bzw. Mannlöcher ohne weiteres besteht. Weist ein Flügel- oder Leitwerkskasten jedoch nur eine geringe Profildicke bei einer relativ großen Profiltiefe auf, wie dies beispielsweise bei Überschallflugzeugen der Fall ist, so ist die betreffende Montage der Schalen an den Holmen und Rippen wegen der dann sehr beschränkten Zugänglichkeit äußerst schwierig. Die weitgehende Verwendung von Blindnieten ist hier kein Ausweg, da die hier in Betracht kommenden Arten von Blindnieten zwei entscheidende Nachteile aufweisen: Sie sind entweder zu aufwendig oder nur für untergeordnete Anwendungen zugelassen.

Das Dokument US-A-1 877 022 zeigt eine Tragstruktur für eine Fläche an einem Flugzeug, bestehend aus mindestens zwei Holmen, mehreren aus Rippenelementen bestehenden Rippen und zwei aus mehreren Schalenelementen bestehenden Schalen, wobei sich die Rippen in Richtung der Profiltiefe der Tragstruktur erstrecken und die Längserstreckung der Holme und Schalen annähernd der Spannweite der Tragstruktur entspricht, wobei ferner die Schalen und Rippen in Richtung der Profiltiefe mit annähernd gleicher Teilung in mehrere Schalenelemente bzw. Rippenelemente unterteilt sind und die Tragstruktur aus mehreren Strukturelementen gebildet ist, die jeweils aus einem Holm, zwei Schalenelementen und mehreren Rippenelementen bestehen und die Strukturelemente so miteinander verschachtelt sind, daß ein nachfolgendes Strukturelement in ein vorhergehendes Strukturelement eingefügt ist. Dabei besteht jedes Strukturelement aus einem durch Abkanten hergestellten Blechkanal mit U-förmigem Querschnitt, dessen Joch einen Holm und dessen beide Schenkel jeweils ein Schalenelement bilden. Die Verbindung zwischen einem vorhergehenden und einem nachfolgenden Strukturelement wird durch Niete im Überlappungsbereich der Schalenelemente hergestellt. Hierbei ergibt sich die Maßhaltigkeit der örtlichen Profildicke im Bereich des jeweiligen Holms durch die Genauigkeit der betreffenden Abkantungen. Diese Tragstruktur kann zwar auch dann noch montiert werden, wenn eine Zugänglichkeit von innen zum Setzen der Niete kaum noch gegeben ist aber hierbei ist weiterhin von Nachteil, daß die Rippenelemente einteilig ausgebildet sind und zwei in Richtung der Profildicke einander gegenüberliegende Bördel bzw. Flansche aufweisen, die mit den Schalenelementen vernietet werden. Damit ergibt sich die Genauigkeit, mit der die örtliche Profildicke im Bereich der Rippen eingehalten wird, im wesentlichen aus der Maßhaltigkeit der jeweiligen Bördel.

Demgemäß liegt der Erfindung die Aufgabe zugrunde, eine Tragstruktur für eine aerodynamische Fläche der eingangs genannten Art so auszubilden, daß die Maße der Profildicke im Bereich der Holme und Rippen sehr genau einhaltbar sind.

Diese Aufgabe wird bei einer gattungsgemäßen Tragstruktur durch die kennzeichnenden Merkmale des Patentanspruchs 1 gelöst.

Dabei ist insbesondere von Vorteil, daß die Profildicke sehr genau eingehalten werden kann, so daß unzulässige Profilabweichungen vermieden werden.

Die vorgeschlagene Bauweise ist auf alle im Flugzeugbau üblichen Werkstoffe anwendbar. So kommen beispielsweise für Schalenelemente, Holme und Rippenelemente Aluminiumbleche in Betracht. Die genannten Bauteile können auch aus faserverstärktem Kunststoff hergestellt werden, wobei insbesondere mit Kohlefasern verstärkte Kunststoffe interessant sind.

Die Erfindung ist anhand der Zeichnung dargestellt und nachfolgend näher erläutert. Es zeigen
- Fig. 1: ein Seitenleitwerk von geringer Profildicke,
- Fig. 2: schematisch zwei Strukturelemente,
- Fig. 3: die Einzelheiten III und III' nach Fig. 2,
- Fig. 4: den Teilschnitt IV - IV nach Fig. 1,
- Fig. 5: die Einzelheit V nach Fig. 4,
- Fig. 6: die Einzelheit VI nach Fig. 4,
- Fig. 7: die Einzelheit VII nach Fig. 4,
- Fig. 8: den Schnitt VIII - VIII nach Fig. 6 und
- Fig. 9: eine Tragstruktur für ein Höhenleitwerk.

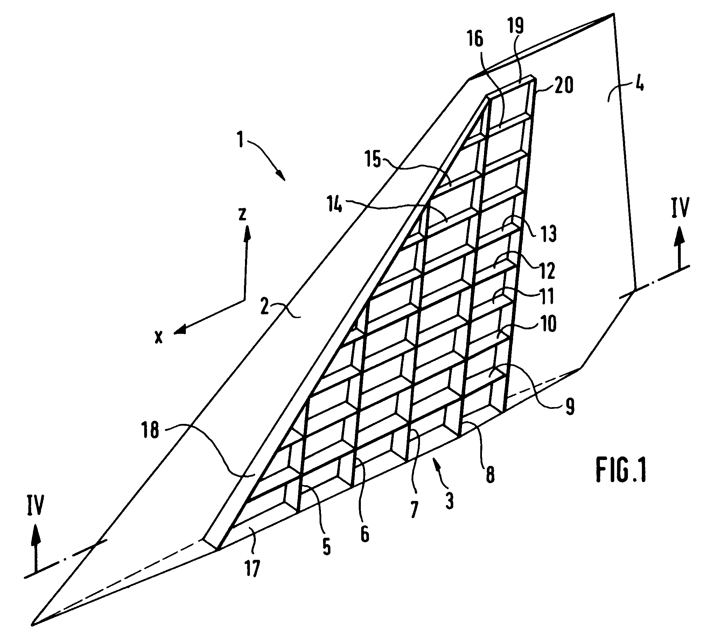

Fig. 1 zeigt schematisch ein Seitenleitwerk 1 mit einem Nasenteil 2, einer Tragstruktur 3 und einem Ruder 4, wobei die flugzeugfesten Koordinaten x und z der Orientierung dienen. Die dem Betrachter zugewandte Schale der Tragstruktur 3 ist entfernt, so daß die Holme 5,6,7,8 und die Rippen 9,10,11,12,13,14,15,16 sichtbar sind. Die besagten Holme und Rippen verlaufen jeweils annähernd parallel und schneiden sich unter einem Winkel von annähernd 90°. Die Tragstruktur wird durch die Anschlußrippe 17, den schräg verlaufenden Vorderholm 18, die Endrippe 19 und den Hinterholm 20 begrenzt. Da die Tragstruktur 3 eine geringe Profildicke bei einer relativ großen Profiltiefe aufweist, sind besondere Maßnahmen erforderlich, um die Herstellung der Tragstruktur zu erleichtern. Daher ist vorgesehen, daß die Schalen und Rippen in Richtung der Profiltiefe mit annähernd gleicher Teilung in mehrere Schalenelemente bzw. Rippenelemente unterteilt sind und die Tragstruktur 3 aus mehreren Strukturelementen gebildet ist, die jeweils aus einem Holm, zwei Schalenelementen und mehreren Rippenelementen bestehen und die Strukturelemente so miteinander verschachtelt sind, daß ein nachfolgendes Strukturelement in ein vorhergehendes Strukturelement eingefügt ist. Ein derartiges Strukturelement stellt praktisch eine streifenförmige Baugruppe dar, die mit anderen ähnlichen Strukturelementen zu der Tragstruktur zusammengefügt wird.

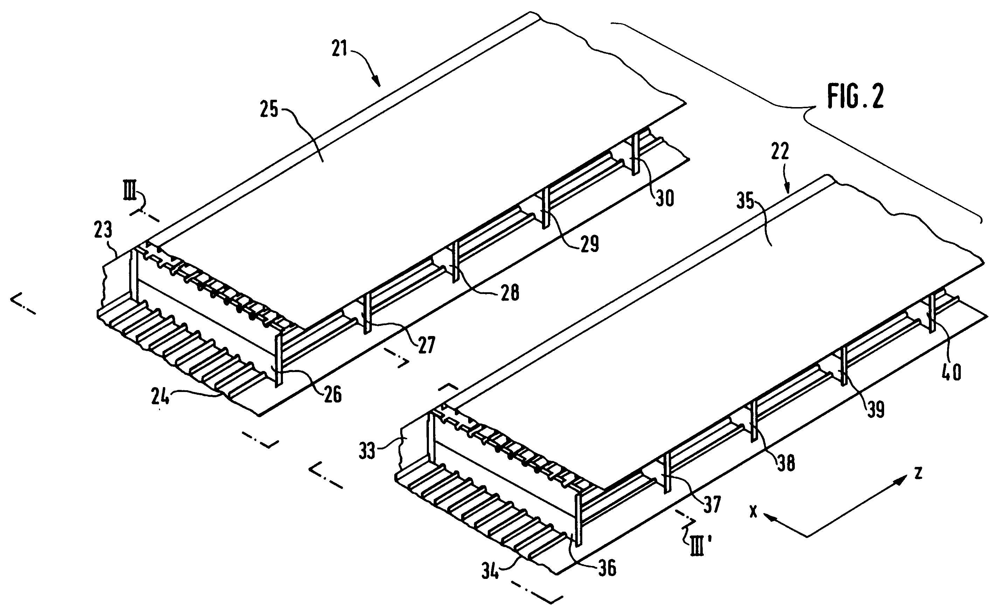

Fig. 2 zeigt schematisch zwei Strukturelemente 21 und 22, die jeweils eine vorgefertigte Baugruppe darstellen. Das Strukturelement 21 besteht im wesentlichen aus dem Holm 23 und den Schalenelementen 24 und 25, die mit dem Holm 23 eine Art U-Profil bilden. Die Schalenelemente 24 und 25 sind über die Rippenelemente 26 bis 30 miteinander verbunden, so daß der zwischen den Schalenelementen 24 und 25 befindliche Raum in mehrere quaderförmige Hohlräume unterteilt wird. Das so gebildete Strukturelement 21 ist zwar auf der Holmseite geschlossen, auf der gegenüberliegenden Seite aber völlig offen. Aufgrund der guten Zugänglichkeit der betreffenden Verbindungsstellen von der offenen Seite her können alle zum Zusammenbau des Strukturelementes 21 erforderlichen Nietverbindungen bereits als Fertignietungen ohne Blindniete ausgeführt werden. Hierzu zählen die Verbindungen der Schalenelemente 24,25 sowohl mit dem Holm 23 als auch mit den Rippenelementen 26 bis 30. Zur Herstellung der betreffenden Fertignietungen dienen Universalniete oder Schraubniete, die auf konventionelle Weise gesetzt werden. Lediglich die Verbindungen zwischen dem Holm 23 und den Rippenelementen 26 bis 30 werden, wie noch gezeigt wird, zu einem späteren Zeitpunkt hergestellt. Das Strukturelement 22 ist in gleicher Weise aus dem Holm 33, den Schalenelementen 34,35 und den Rippenelementen 36 bis 40 aufgebaut. Bei allen Strukturelementen 21,22 u.s.f. sind die jeweiligen Holme 23,33 noch nicht mit den betreffenden Rippenelementen verbunden. Diese Verbindungen werden erst beim Zusammenfügen der Strukturelemente hergestellt.

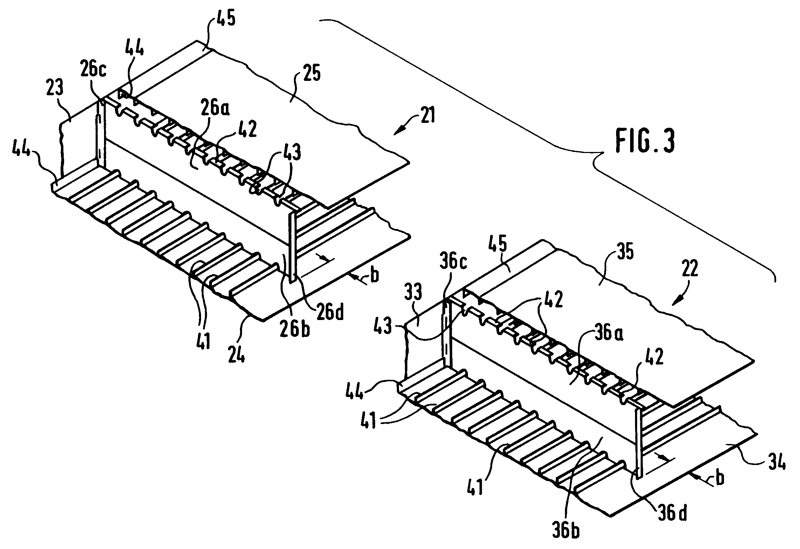

Fig. 3 zeigt die Einzelheiten III und III' nach Fig. 2, wobei von jedem Strukturelement 21 bzw. 22 nur der Ausschnitt mit dem Rippenelement 26 bzw. 36 gezeigt ist. Es wird zunächst das Strukturelement 21 betrachtet. Die Schalenelemente 24 und 25 sind durch Stringer 41 ausgesteift. An seinen den Schalenelementen 24,25 zugewandten Rändern weist das Rippenelement 26 eine Vielzahl von Nietflanschen 42 auf, die sich dem jeweiligen Schalenelement genau anschmiegen. Zwischen den einzelnen Nietflanschen 42 sind Ausschnitte 43 für die Stringer 41 angeordnet. Das Rippenelement 26 besteht aus zwei Hälften 26a,26b, die miteinander vernietet sind. Zur Verbindung des Rippenelementes 26 mit dem Holm 23 ist ein L-Profil 26c vorgesehen, das mit dem Rippenelement 26 durch eine Fertignietung so verbunden ist, daß der noch freie Schenkel des Profils planparallel und spannungsfrei am Holm 23 anliegt. An dem dem Holm 23 abgewandten Ende des Rippenelementes 26 ist ein weiteres L-Profil 26d auf gleiche Weise an vorbestimmter Position angebracht. Zur Verbindung des Holmes 23 mit den Schalenelementen 24,25 sind diese an ihren holmseitigen Längskanten mit Holmgurten 44 versehen, die so ausgerichtet sind, daß sie zur Vernietung planparallel am Holm 23 anliegen, so daß beide Elemente durch Nieten miteinander verbindbar sind. Im Bereich des Holmes 23 weist jedes Schalenelement 24,25 eine Durchsetzung 45 um ein vorbestimmtes Maß auf. An der offenen Seite des Strukturelementes überragen die Schalenelemente 24,25 die Enden der Rippenelemente um ein vorbestimmtes Maß b, so daß die Schalenelemente 24,25 hier freie Ränder von der Breite b aufweisen. Das Strukturelement 22 ist in gleicher Weise aus den Schalenelementen 34,35 und dem Holm 33 aufgebaut. Das Rippenelement 36 besteht aus zwei Hälften, die hier mit 36a und 36b bezeichnet sind. Die betreffenden L-Profile sind mit 36c bzw. 36d bezeichnet. Auch das Strukturelement 22 weist Stringer 41, Nietflansche 42, Aussparungen 43, Holmgurte 44 und Durchsetzungen 45 auf. Um nun eine Tragstruktur aus mehreren Strukturelementen 21, 22 u.s.f. aufzubauen, werden diese so miteinander verschachtelt, daß beispielsweise das nachfolgende Strukturelement 22 in das vorhergehende Strukturelement 21 eingeschoben wird. Hierzu wird das nachfolgende Strukturelement 22 mit dem Holm 33 voraus zwischen die freien Ränder der Schalenelemente 24,25 geschoben, bis der Holm 33 an allen L-Profilen 26d bis 30d anliegt.

Dabei ist darauf zu achten, daß die Ausrichtung in Längsrichtung, das heißt in z-Richtung, so erfolgt, daß die Rippenelemente 36 bis 40 des Strukturelementes 22 und die Rippenelemente 26 bis 30 des Strukturelementes 21 miteinander fluchten. Im gezeigten Beispiel liegen sich dann die jeweiligen L-Profile 26d und 36c u.s.w. am Holm 33 ohne Versatz gegenüber. Ist das Strukturelement 22 gegenüber dem Strukturelement 21 in x- und z-Richtung wie vorbeschrieben positioniert und fixiert, so werden beide Strukturelemente 21,22 durch Fertignietungen miteinander verbunden, wozu zunächst die betreffenden Nietbohrungen angebracht werden. Im Bereich der Überlappungen der freien Ränder des vorhergehenden Strukturelementes mit den Durchsetzungen des nachfolgenden Strukturelementes werden mehrere Reihen von Universalnieten vorgesehen. Im Bereich der L-Profile 26d, 36c werden die betreffenden Nietverbindungen holmseitig durch hochwertige Blindniete realisiert. Beispielsweise sind Blindniete gemäß NAS 1919 im Falle der Verwendung fachüblicher Aluminiumbleche sinnvoll. Bei Verwendung kohlefaserverstärkter Kunststoffe sind demgegenüber Blindniete etwa gemäß MS 21141 sinnvoll.

Die notwendige Zugänglichkeit für Nietarbeiten ist jeweils dadurch sichergestellt, daß jedes nachfolgende Strukturelement eine offene Seite aufweist, von der aus alle für den Zusammenbau der Tragstruktur erforderlichen Nietstellen erreichbar sind.

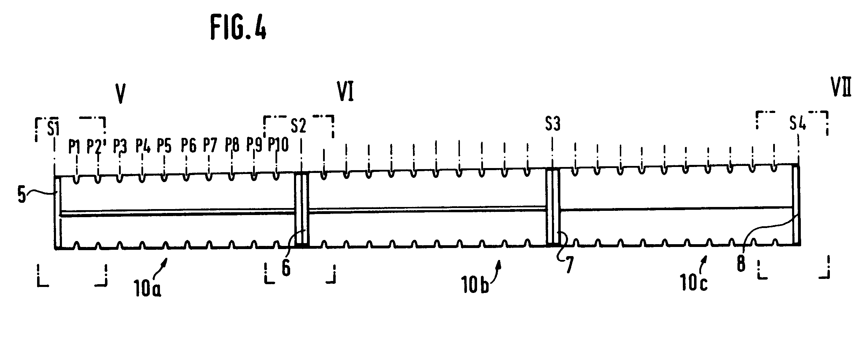

Fig. 4 zeigt den Schnitt IV - IV nach Fig. 1. Darin erscheinen die Holme 5,6,7 und 8 im Querschnitt. Die parallel zur Bildebene orientierte Fläche stellt die Rippe 10 dar, die aus den Rippenelementen 10a,10b und 10c besteht.

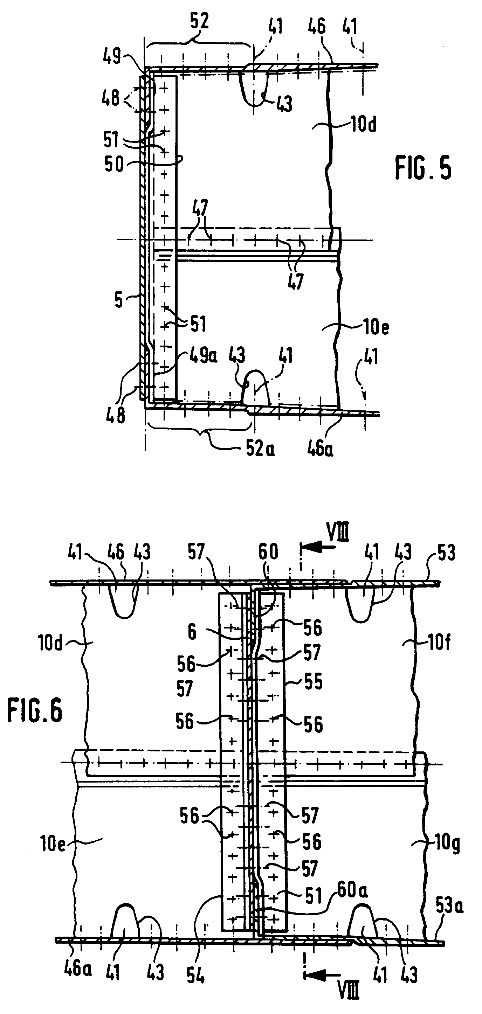

Fig. 5 zeigt die Einzelheit V nach Fig. 4 mit dem Holm 5, den Hälften 10d und 10e, aus denen das Rippenelement 10a besteht, mit den jeweiligen Ausschnitten 43 und den Schalenelementen 46 und 46a mit den jeweiligen Stringern 41. Die Hälften 10d und 10e sind durch Niete 47 miteinander verbunden. Die Holmgurte 49 und 49a der Schalenelemente 46 und 46a sind durch Niete 48 mit dem Holm 5 verbunden. Das L-Profil 50 ist durch Niete 51 mit den Rippenhälften 10d,10e verbunden. Die Durchsetzungen 52, 52a der Außenfläche entsprechen den Dicken der vorhergehenden Schalenelemente 46 und 46a.

In Fig. 6 ist ein Schnitt durch die Verbindung zweier Strukturelemente dargestellt. Zu dem vorhergehenden Strukturelement gehören die Hälften 10d und 10e des Rippenelementes 10a sowie die Schalenelemente 46 und 46a und das L-Profil 54. Das nachfolgende Strukturelement wird gebildet durch den Holm 6, die Schalenelemente 53 und 53a, die Rippenhälften 10f,10g und das L-Profil 55. Das letztgenannte Strukturelement ist mit seinen Durchsetzungen in das vorhergehende Strukturelement so eingefügt, daß der Holm 6 an dem L-Profil 54 anliegt und die durchgesetzten Bereiche der Schalenelemente 53 und 53a mit den überragenden Rändern der Schalenelemente 46,46a jeweils eine Überlappung bilden. Im Bereich der Überlappungen ist jeweils eine durch Nietreihen gebildete Verbindung vorgesehen. Die L-Profile 54 und 55 sind mit den Rippenhälften 10d bis 10g durch Niete 56 verbunden. Der Holm 6 ist mit den beiden L-Profilen 54,55 durch Blindniete 57 verbunden, deren Setzköpfe sich im Bild rechts vom Holm 6 befinden. Dies ist die während des Nietens zugängliche Seite des Holmes 6.

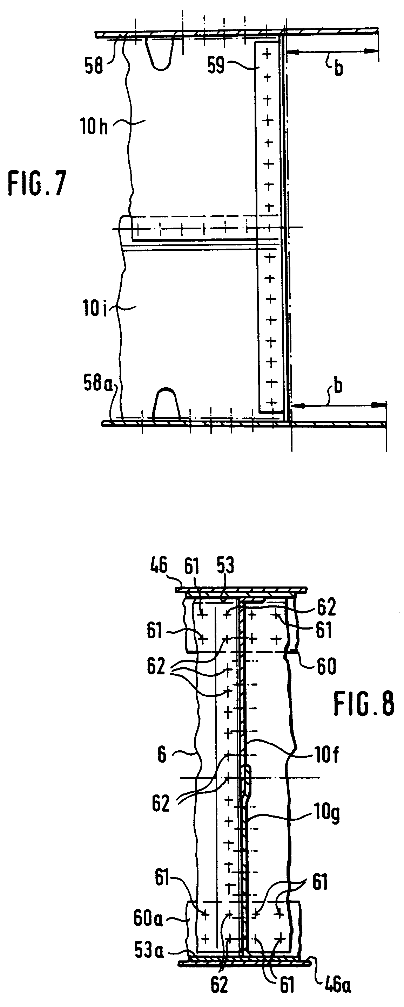

Fig. 7 zeigt den Endbereich des Strukturelementes, dem entsprechend Fig. 4 das Rippenelement 10c zugeordnet ist. Das Rippenelement 10c besteht aus den Hälften 10h und 10i, mit denen die Schalenelemente 58 und 58a verbunden sind. Das betreffende L-Profil ist mit 59 bezeichnet. Das nachfolgende Strukturelement wird zwischen den überragenden Rändern von der Breite b der Schalenelemente 58,58a bis zur Anlage am L-Profil 59 eingefügt.

Fig. 8 zeigt den Schnitt VIII - VIII nach Fig. 6 mit dem Holm 6, den Rippenhälften 10f und 10g, den Schalenelementen 46 und 46a und den durchgesetzten Bereichen der Schalenelemente 53 und 53a mit den Gurten 60 und 60a. Die Gurte 60,60a sind mit dem Holm 6 durch Niete 61 verbunden. Zur Verbindung des L-Profils 55 mit dem Holm 6 und dem dahinterliegenden L-Profil 54 dienen die Blindniete 62, deren Setzköpfe hier in der Ansicht erscheinen.

Die vorbeschriebenen Beispiele betreffen nur Lösungen, wobei sich Holme und Rippen unter einem Winkel von annähernd 90° schneiden, so daß nur Felder mit annähernd rechteckiger Grundfläche entstehen. Wie Fig.1 jedoch zeigt, können infolge des schräg verlaufenden Vorderholms 18 auch Felder mit dreieckiger oder trapezförmiger Grundfläche entstehen. Die konstruktive Ausbildung entsprechender schräger Holm/Rippenverbindungen ergibt sich aufgrund fachüblicher Maßnahmen.

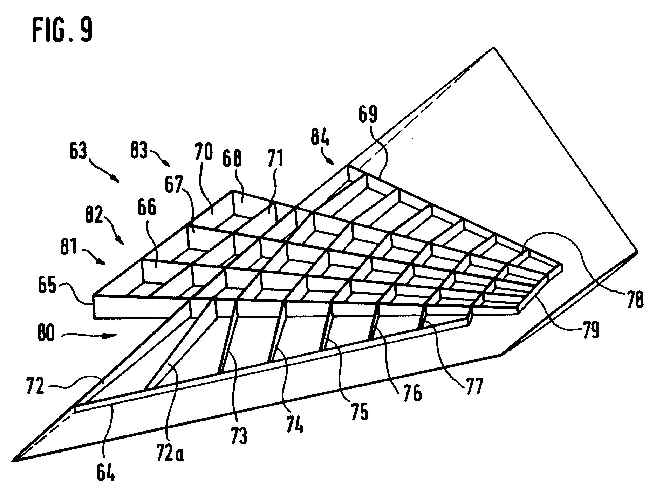

Fig. 9 zeigt schematisch ein Höhenleitwerk 63 mit geringer Profildicke und großer Profiltiefe, dessen Tragstruktur durch die Holme 64 bis 69 und die Rippen 70 bis 79 gebildet wird. Der Übersichtlichkeit halber sind die betreffenden Schalenelemente nicht gezeigt. Auch die Tragstruktur dieses Leitwerks kann wieder anhand der erfindungsgemäßen Schachtelbauweise hergestellt werden. Hierzu werden zunächst die durch Pfeile gekennzeichneten Strukturelemente 80 bis 84 vorgefertigt und wie oben beschrieben, miteinander verschachtelt. Diese Ausbildung weist gegenüber der Lösung nach Fig. 1 die Besonderheit auf, daß die Holme 64 bis 69 einen konvergenten Verlauf zeigen. Eine weitere Besonderheit dieser Ausbildung besteht darin, daß die Rippen 73 bis 79 den Verlauf eines Streckenzuges zeigen. Das Bild zeigt anhand der Rippen 70,71 und 72a, daß die Länge und die Anzahl der Rippenelemente eines Strukturelementes 80 bis 84 unabhängig von der Länge und der Anzahl der Rippenelemente des jeweils vorhergehenden Strukturelementes 80 bis 84 ist.

## Patentansprüche

1. Tragstruktur für eine aerodynamische Fläche an einem Flugzeug, bestehend aus mindestens zwei Holmen, mehreren aus Rippenelementen bestehenden Rippen und zwei aus mehreren Schalenelementen (24,25,34,35) bestehenden Schalen, wobei sich die Rippen in Richtung der Profiltiefe der Tragstruktur erstrecken und die Längserstreckung der Holme und Schalen annähernd der Spannweite der Tragstruktur entspricht, wobei die Schalen und Rippen in Richtung der Profiltiefe mit annähernd gleicher Teilung in mehrere Schalenelemente (24,25,34, 35) bzw. Rippenelemente (10a,10b,10,26-30,36-40) unterteilt sind und die Tragstruktur aus mehreren Strukturelementen (21,22,81,82,83,84) gebildet ist, die jeweils aus einem Holm (5-8,18,20,23,33,64-69), zwei Schalenelementen (24,25, 34,35) und mehreren Rippenelementen (10a,10b,10,26-30,36-40) bestehen und die Strukturelemente (21,22,81,82,83,84) so miteinander verschachtelt sind, daß ein nachfolgendes Strukturelement (21,22,81,82,83,84) in ein vorhergehendes Strukturelement (21,22,81,82,83,84) eingefügt ist,
**dadurch gekennzeichnet,** daß die einzelnen Rippenelemente (10a,10b,10,26-30,36-40) in Richtung der Profildicke in zwei Hälften (26a,26b,36a,36b,10d,10e,10f,10g,10h,10i) unterteilt sind und die Schalenelemente (24,25,34,35) an ihren holmseitigen Längskanten Holmgurte (44,49,49a,60,60a) aufweisen, die planparallel am Holm (5-8,18,20,23,33,64-69) anliegen und mit diesem vernietet sind.

2. Tragstruktur nach Anspruch 1,
dadurch **gekennzeichnet,** daß die Holme (64 bis 69) einen konvergenten Verlauf zeigen.

3. Tragstruktur nach Anspruch 1 oder 2,
dadurch **gekennzeichnet,** daß die Rippen (73 bis 79) den Verlauf eines Streckenzuges zeigen.

4. Tragstruktur nach einem der Ansprüche 1 bis 3,
dadurch **gekennzeichnet,** daß die Länge und die Anzahl der Rippenelemente eines Strukturelementes (80 bis 84) unabhängig von der Länge und der Anzahl der Rippenelemente des jeweils vorhergehenden Strukturelementes (80 bis 84) ist.

## Claims

1. Supporting structure for an aerodynamic surface on an aircraft, consisting of at least two spars, a plurality of ribs consisting of rib elements and two shells consisting of a plurality of shell elements (24, 25, 34, 35), wherein the ribs extend in the direction of the depth of the section of the supporting structure and the longitudinal extent of the spars and shells corresponds approximately to the span of the supporting structure, wherein the shells and ribs are divided in the direction of the depth of the section with approximately the same spacing into a plurality of shell elements (24, 25, 34, 35) or rib elements (10a, 10b, 10, 26-30, 36-40) respectively and the supporting structure is formed of a plurality of structure elements (21, 22, 81, 82, 83, 84) which each consist of a spar (5-8, 18, 20, 23, 33, 64-69), two shell elements (24, 25, 34, 35) and a plurality of rib elements (10a, 10b, 10, 26-30, 36-40) and the structure elements (21, 22, 81, 82, 83, 84) are nested with one another so that a succeeding structure element (21, 22, 81, 82, 83, 84) is fitted into a preceding structure element (21, 22, 81, 82, 83, 84), characterised in that the individual rib elements (10a, 10b, 10, 26-30, 36-40) are divided into two halves (26a, 26b, 36a, 36b, 10d, 10e, 10f, 10g, 10h, 10i) in the direction of the depth of the section and the shell elements (24, 25, 34, 35) have on their long edges on the spar side spar flanges (44, 49, 49a, 60, 60a) which rest plane parallel on the spar (5-8, 18, 20, 23, 33, 64-69) and are riveted thereto.

2. Supporting structure according to Claim 1, characterised in that the spars (64 to 69) extend in a convergent arrangement.

3. Supporting structure according to Claim 1 or 2, characterised in that the ribs (73 to 79) extend like traverses.

4. Supporting structure according to one of Claims 1 to 3, characterised in that the length and the number of the rib elements of a structure element (80 to 84) are independent of the length and the number of the rib elements of the structure element (80 to 84) preceding it in each case.

## Revendications

1. Structure portante pour une surface aérodynamique sur un avion, composée au moins de deux longerons, de plusieurs nervures composées d'éléments à nervures et de deux coquilles composées de plusieurs éléments en coquille (24, 25, 34, 35), dans laquelle les nervures s'étendent dans la direction de la profondeur profilée de la structure portante et l'extension longitudinale des longerons et des coquilles correspond approximativement à l'envergure de la structure portante, dans laquelle les coquilles et les nervures dans la direction de la profondeur profilée sont divisées à peu près de la même manière en plusieurs éléments en coquille (24, 25, 34, 35) respectivement nervures (10a, 10b, 10, 26-30, 36-40) et la structure portante est formée de plusieurs éléments structurels (21, 22, 81, 82, 83, 84), qui se composent d'un longeron (5-8, 18, 20, 23, 33, 64-69), de deux éléments en coquille (24, 25, 34, 35) et de plusieurs nervures (10a, 10b, 10, 26-30, 36-40) et dans laquelle les éléments structurels (21, 22, 81, 82, 83, 84) sont intercalés l'un dans l'autre de telle manière qu'un élément structurel placé en aval (21, 22, 81, 82, 83, 84) est inséré dans un élément structure! placé en amont (21, 22, 81, 82, 83, 84), **caractérisée en ce que** les diverses nervures (10a, 10b, 10, 26-30, 36-40) dans la direction de l'épaisseur profilée sont divisées en deux moitiés (26a, 26b, 36a, 36b, 10d, 10e, 10f, 10g, 10h, 10i) et en ce que les éléments en coquille (24, 25, 34, 35) présentent sur leurs bords longitudinaux côté longeron des membrures (44, 49, 49a, 60, 60a) qui reposent parallèlement au plan sur le longeron (5-8, 18, 20, 23, 33, 64-69) et qui sont rivés à celui-ci.

2. Structure portante selon la revendication 1, caractérisée en ce que les longerons (64 à 69) décrivent un parcours convergent.

3. Structure portante selon la revendication 1 ou 2, caractérisée en ce que les nervures (73 à 79) décrivent le parcours d'une traction linéaire.

4. Structure portante selon l'une ou l'autre des revendications 1 à 3, caractérisée en ce que la longueur et le nombre des nervures d'un élément structurel (80 à 84) sont indépendants de la longueur et du nombre des nervures de l'élément structurel placé en amont (80 à 84).
